# FASCICULE DE BREVET EUROPEEN

(11) **EP 3 931 464 B1**
(45) Date de publication et mention de la délivrance du brevet: **23.10.2024**
(21) Numéro de dépôt: 20708451.8
(22) Date de dépôt: 24.02.2020
(51) Int. Cl.: F16H 3/00, F16H 3/093

(54) **DISPOSITIF DE TRANSMISSION DE COUPLE POUR UN VEHICULE AUTOMOBILE**
DREHMOMENTÜBERTRAGUNGSVORRICHTUNG FÜR EIN KRAFTFAHRZEUG
TORQUE TRANSMISSION DEVICE FOR A MOTOR VEHICLE

(30) Priorité: 25.02.2019 FR 1901916
(43) Date de publication de la demande: 05.01.2022
(73) Titulaire: VALEO EMBRAYAGES, 80009 Amiens (FR)
(72) Inventeur: MAUREL, Hervé, 95892 CERGY PONTOISE (FR); TERMENON, Norberto, 95892 CERGY PONTOISE (FR); JIVAN, Camelia, 95892 CERGY PONTOISE (FR); GUINOT, Thierry, 95892 CERGY PONTOISE (FR); PECOUL, Jean-Christophe, 80009 AMIENS (FR)
(74) Mandataire: Valeo Powertrain Systems
(86) Numéro de dépôt international: PCT/EP2020/054796
(87) Numéro de publication internationale: WO 2020/173887

(56) Documents cités:
- FR-A1- 2 803 355
- FR-A1- 2 945 599
- FR-A1- 2 948 984
- US-A1- 2006 048 594
- US-A1- 2006 117 882

## Description

### Domaine technique de l'invention

L'invention concerne un dispositif de transmission de couple pour un véhicule électrique ou hybride, notamment pour un véhicule automobile électrique ou hybride.

### Etat de la technique antérieure

L'invention s'applique plus particulièrement aux véhicules hybrides et aux véhicules électriques. Les vitesses d'un moteur électrique peuvent être élevées, supérieures ou égales à 15000 tours par minutes par exemple, notamment pour des chaines de transmission électriques à deux rapports.

Pour adapter la vitesse et le couple, l'utilisation de moteurs électriques nécessite généralement une transmission comportant un dispositif de réduction de vitesse, voir US 2006/117882, permettant d'atteindre les niveaux de vitesse et de couple de sortie souhaités à chaque roue, et un différentiel pour faire varier la vitesse entre deux roues latéralement opposées.

Pour s'adapter aux différents régimes du véhicule, il est connu d'utiliser des embrayages qui permettent de sélectionner le rapport de réduction souhaité au niveau du dispositif de réduction de vitesse. Ce type de dispositif est par exemple divulgué dans le document DE102016202723.

Ce dispositif n'est pas satisfaisant du point de vue du rendement car un couple de trainée intervient sur l'un des embrayages qui est ouvert lorsque l'autre des embrayages est fermé. Ce couple de trainée est particulièrement préjudiciable lorsque les embrayages sont humides. En outre, les embrayages de ce dispositif transmettent un couple relativement important, ce qui implique un dimensionnement et une masse des embrayages importants, et donc un encombrement important lié auxembrayages.

### Présentation de l'invention

A cet effet, l'invention concerne un dispositif de transmission de couple pour un véhicule tel que défini par les revendications suivantes.

On entend par rapport de vitesse, le ratio entre la vitesse à la sortie du mécanisme de transmission et la vitesse à l'entrée du mécanisme de transmission

L'utilisation d'au moins deux rapports de vitesses permet de concilier couple de démarrage élevé et vitesse maximale et par conséquent de réduire le temps nécessaire au véhicule pour atteindre une vitesse élevée.

De préférence, le moteur est un moteur électrique appelé aussi machine électrique.

De préférence, la machine électrique est apte à entrainer le véhicule et à générer de l'électricité.

L'utilisation des embrayages, notamment des embrayages multidisques progressifs, permet également de garantir le confort de l'utilisateur en évitant les changements de rapports brusques ainsi que les variations perceptiblesd'accélération.

De plus, l'élément de connexion permet d'interrompre l'entrainement de l'élément de sortie du premier embrayage, et notamment les disques de friction de sortie du premier embrayage, lorsque le deuxième embrayage est fermé. Cela permet de limiter significativement, voire de supprimer le couple de trainée au niveau du premier embrayage lorsque le deuxième embrayage est fermé, ce qui permet d'améliorer le rendement énergétique.

De plus, lorsque le premier mécanisme de transmission est un réducteur de vitesse avec un rapport de vitesse faible et/ou lorsque le ratio entre le rapport de réduction du deuxième mécanisme de transmission et le rapport de réduction premier mécanisme de transmission (appelé aussi rapport d'ouverture de la boite de vitesse) est élevé, par exemple compris entre 1,3 et 2, et à fortiori lorsque les premier et deuxième élément d'entrée des embrayages sont entrainés directement, sans réducteur intermédiaire, par un moteur électrique pouvant tourner jusqu'à 15000 tours par minutes, l'ouverture de l'élément de connexion permet d'éviter une centrifugation excessive du premier élément de sortie du premier embrayage qui pourrait tourner à une vitesse supérieurà celle du moteur (qui est déjà très élevée) lorsque le deuxième embrayage est fermé et que le premier embrayage est ouvert. En effet, le premier mécanisme de transmission agirait comme un multiplicateur de vitesse vis-à-vis du premier élément de sortie du premier embrayage lorsque le couple est transmis par le deuxième embrayage.

L'invention permet par conséquent d'améliorer la sécurité du dispositif de transmission de couple. Par exemple, avec un moteur électrique tournant à 15000 tours par minute et un rapport d'ouverture de 2 entre les premier et deuxième mécanismes de transmission, le premier élément de sortie du premier embrayage pourrait par exemple tourner à 30000 tours par minute en l'absence d'élément de connexion disposé pourinterrompre l'entrainement entre le premier élément de sortie et l'organe de transmission. Cette vitesse de rotation du premier élément de sortie est susceptible de créer des problèmes de tenue mécanique et pourrait générer des disfonctionnements au niveau du premier embrayage.

Le véhicule peut comporter deux ou quatre roues motrices. Le dispositif de transmission de couple peut fonctionner avec un ou deux moteurs électriques par exemple. Dans le cas de l'utilisation de deux moteurs électriques, chaque moteur électrique pourrait par exemple être couplé à deux roues du véhicule, par l'intermédiaire des embrayages et du dispositif de transmission de couple correspondant.

Le dispositif de transmission peut comporte des caractéristiques ci-dessous :
Le dispositif de transmission est un dispositif de transmission à deux rapports de vitesse. Autrement dit, le dispositif de transmission comprend exactement deux rapports de vitesses. Le premier rapport de vitesse est le rapport de vitesse le plus lent du dispositif de transmission de couple.

Le premier mécanisme de transmission est configuré pour faire avancer le véhicule dans les phases de démarrage. Autrement dit, le chemin de transmission passe par le premier mécanisme de transmission lors du démarrage du véhicule.

Le deuxième rapport de vitesse est le rapport de vitesse le plus rapide du dispositif de transmission de couple.

Le choix de deux rapports de vitesse avec un moteur électrique offre un bon compromis entre complexité de la transmission, performances dynamiques, consommation du véhicule, et taille du moteur électrique.

Le premier embrayage et le deuxième embrayage sont des embrayages multidisques humides.

L'élémentdeconnexion (6) est agencé pourcoopéreruniquementavecle premier mécanisme de de transmission associé au premier rapport de vitesse.

L'élément de connexion est agencé pour autoriser l'entrainement mutuel en rotation entre le premier élément de sortie du premier embrayage et l'organe de transmission, par l'intermédiaire du premier mécanisme de transmission, lorsque le premier embrayage est fermé ; et pour interrompre l'entrainement mutuel en rotation entre le premier élément de sortie du premier embrayage et l'organe de transmission, par l'intermédiaire du premier mécanisme de transmission, lorsque le premier embrayage est ouvert.

L'élément de connexion est agencé de façon à autoriser ou interrompre l'entrainement mutuel entre l'organe de transmission et le premier mécanisme de transmission.

Ainsi on évite également d'avoir des pertes de rendementspréjudiciablesau niveau du premier mécanisme de transmission, liées en particulier au barbotage dans l'huile.

Selon un autre mode de réalisation non représenté, l'élément de connexion est agencé de façon à autoriser ou interrompre l'entrainement mutuel entre le premier élément de sortie du premier embrayage et le premier mécanisme de transmission.

Le premier mécanisme de transmission comprend un train d'engrenages.

Le deuxième mécanisme de transmission comprend un train d'engrenages.

Le premier mécanisme de transmission est un réducteur et le premier mécanisme de transmission a un rapport de vitesse plus faible que le deuxième mécanisme de transmission. On entend par réducteur, un réducteur de vitesse.

Le deuxième mécanisme de transmission est un réducteur.

Le premier élément d'entrée et le deuxième élément d'entrée sont agencés pour être entrainés par un arbre d'entrée de couple commun

Le premier mécanisme de transmission comprend un train d'engrenages, parexemple à axes parallèles fixes.

Le deuxième mécanisme de transmission comprend un train d'engrenages, par exemple à axes parallèles fixes.

Le premier mécanisme de transmission fonctionne dans un milieu humide comprenant de l'huile. Le premier mécanisme de transmission est susceptible d'être freiné par un phénomène de barbotage lorsqu'il est entrainé en rotation.

Le premier mécanisme de transmission comprend un premier arbre d'entrée.

Le deuxième mécanisme de transmission comprend un deuxième arbre d'entrée.

L'un au moins parmi le premier arbre d'entrée et le deuxième arbre d'entrée est un arbre creux et l'autre parmi le premier arbre d'entrée et le deuxième arbre d'entrée s'étend à l'intérieur de l'arbre creux

Le premier arbre d'entrée et le deuxième arbre d'entrée sont coaxiaux

Le premier arbre d'entrée est solidaire en rotation d'une première roue dentée d'entrée.

Le deuxième arbre d'entrée est solidaire en rotation d'une deuxième roue dentée d'entrée.

Une première roue dentée de sortie engrène directement ou indirectement (via une ou plusieurs roues dentées intermédiaires), avec la première roue dentée d'entrée.

Une deuxième roue dentée de sortie engrène directement ou indirectement (via une ou plusieurs roues dentées intermédiaires), avecla deuxième roue dentée d'entrée.

Selon un autre mode de réalisation, le premier mécanisme de transmission et le deuxième mécanisme de transmission sont situés entre d'une part le moteur et d'autre part les premier et deuxième embrayages,

L'un au moins parmi le premier arbre d'entrée et le deuxième arbre d'entrée est un arbre creux et l'arbre d'entrée de couple commun s'étend à l'intérieurde l'arbre creux

Le premier arbre d'entrée peut être formé d'une seule pièce avec la première roue dentée.

Le deuxième arbre d'entrée peut être formé d'une seule pièce avec la deuxième roue dentée.

La deuxième roue dentée de sortie est solidaire en rotation de l'organe de transmission, par exemple via des cannelures.

La première roue dentée de sortie peut être rendue solidaire en rotation de l'organe de transmission, par l'intermédiaire de l'élément de connexion.

La première roue dentée de sortie est montée rotative sur une portion de l'organe de transmission, par exemple via un palier à roulement ou à aiguilles.

La première roue dentée de sortie peut être couplée en rotation avec une autre portion de l'organe de transmission, via l'élément de connexion.

Le premier mécanisme de transmission présente un rapport de vitesse compris entre 0,2 et 1 et le deuxième mécanisme de transmission présente un rapport de vitesse compris entre 0.25 et 1,5.

Le dispositif de transmission comprend un actionneur apte à faire passer l'élément de connexion d'un premier mode de fonctionnement dans lequel la première roue dentée de sortie est solidaire en rotation de l'organe de transmission à un deuxième mode de fonctionnement dans lequel la première roue dentée de sortie est mobile en rotation par rapport à l'organe de transmission.

L'élément de connexion est du type normalement ouvert. Autrement dit, L'élément de connexion est fermé dans le premier mode de fonctionnement de l'élément de connexion et l'élément de connexion est ouvert dans le deuxième mode de fonctionnement de l'élément de connexion.

L'élément de connexion est commandé de façon pneumatique ou hydraulique.

L'élément de connexion est un synchroniseur.

Le synchroniseur comprend un moyeu solidaire en rotation de l'organe de transmission.

Le synchroniseur comprend un anneau de synchronisation formant avec la première roue dentée de sortie un embrayage conique par friction.

Le synchroniseur comprend un baladeur solidaire en rotation de clavettes, elles même solidaires en rotation du moyeu.

Les clavettes peuvent coulisser axialement par rapport au moyeu. Le baladeur peut également coulisser axialement par rapport au moyeu en entrainant axialement les clavettes.

Les clavettes sont agencées pour frotter contre l'anneau de synchronisation

Le baladeur comprend des dents et la deuxième roue de sortie comprend des dents complémentaires aptes à coopérer avec les dents du baladeur, pour entrainer à la même vitesse le baladeur (et donc l'organe de transmission) et la deuxième roue de sortie lors du premier mode de fonctionnement.

L'embrayage conique par friction permet un changement de vitesse progressif entre le deuxième mode de fonctionnement et le premier mode de fonctionnement du synchroniseur. Une friction intervient entre la première roue dentée de sortie et l'anneau de synchronisation tant que les vitesses de la première roue dentée de sortie et de l'organe de transmission ne sont pas égales.

Selon un autre mode de réalisation, l'élément de connexion est permuté de façon centrifuge. Ainsi, lorsqu'un seuil de vitesse prédéterminé de l'organe de transmission est atteint, l'élément de connexion est permuté pour interrompre l'entrainement. La permutation peut être obtenue au moyen d'un organe de rappel élastique dont l'action est compensée par les efforts centrifuges lorsque ledit seuil de vitesse est atteint.

Le premier embrayage est un embrayage progressif par friction.

Le deuxième embrayage est un embrayage progressif par friction.

On entend par embrayage progressif, un embrayage dont le couple transmissible est pilotable de façon progressive.

Le premier embrayage et le deuxième embrayage forment conjointement un double embrayage.

Le premier élément d'entrée et le deuxième élément d'entrée forment conjointement un organe d'entrée du double embrayage.

Le premier élément d'entrée et le deuxième élément d'entrée ont une portion d'accouplement à l'arbre d'entrée commune.

Le premier élément d'entrée et le deuxième élément d'entrée peuvent être formés dans une même pièce.

Le premier élément d'entrée est couplé à au moins un disque de friction d'entrée

Le premier embrayage comprend un premier élément de sortie monté solidaire en rotation au premier arbre d'entrée par exemple par des cannelures.

Le premier embrayage comprend au moins un disque de friction de sortie couplé en rotation au premier élément de sortie, le dit au moins disque de friction d'entrée et ledit au moins disque de friction de sortie étant aptes à être pressés l'un contre l'autre pour transmettre un couple entre le premier élément d'entrée et le premier élément de sortie.

Le deuxième élément d'entrée est couplé à au moins un disque de friction d'entrée

Le deuxième embrayage comprend un deuxième élément de sortie monté solidaire en rotation au deuxième arbre d'entrée par exemple par des cannelures.

Le deuxième embrayage comprend au moins un disque de friction de sortie couplé en rotation au deuxième élément de sortie, le dit au moins disque de friction d'entrée et ledit au moins disque de friction de sortie étant aptes à être pressés l'un contre l'autre pour transmettre un couple entre le deuxième élément d'entrée et le deuxième élément de sortie,

Le premier embrayage comprend un ensemble multi-disques composé d'une pluralité de disques d'entrée et d'une pluralité de disques de sortie se succédant de façon alternée.

Le deuxième embrayage comprend un ensemble multi-disques composé d'une pluralité de disques d'entrée et d'une pluralité de disques de sortie se succédant de façon alternée.

L'ensemble multidisque de l'un parmi le premier embrayage et le deuxième embrayage se situe radialementà l'intérieur de l'ensemble multidisque de l'autre parmi le premier embrayage et le deuxième embrayage, de préférence avec recouvrement radial.

Le premier embrayage est un embrayage humide.

Le deuxième embrayage est un embrayage humide.

Le premier embrayage est commandé de façon pneumatique ou hydraulique.

Le deuxième embrayage est commandé de façon pneumatique ou hydraulique.

Le premier embrayage est du type normalement ouvert.

Le deuxième embrayage est du type normalement ouvert.

Le premier embrayage et le deuxième embrayage sont coaxiaux

L'organe de transmission comprend un arbre de transmission.

L'organe de transmission est un arbre de transmission.

Le dispositif de transmission de couple comprend un réducteur commun configuré de sorte qu'une entrée du réducteur commun est apte à être entrainée parle moteur et de sorte qu'une sortie du réducteur commun est solidaire en rotation du premier élément d'entrée du premier embrayage et du deuxième élément d'entrée du deuxième embrayage,

En variante ou en combinaison, le dispositif de transmission de couple peut comprendre un réducteur commun configuré de sorte qu'une entrée du réducteur commun est solidaire en rotation de l'organe de transmission et dont une sortie est apte à entrainer en rotation directement ou indirectement le différentiel.

De tels réducteurs sont appelés « réducteur commun » puisque quel que soit le chemin emprunté par le couple, à savoir via le premier embrayage et le premier mécanisme de transmission ou via deuxième embrayage et le deuxième mécanisme de transmission, le couple passe par ce réducteur qui permet de réduire la vitesse d'entrainement.

Dans le deuxième cas de figure l'entrée du réducteur commun peut être une roue dentée monobloc avec l'arbre de transmission.

L'invention porte aussi sur un ensemble de transmission de couple comprenant un dispositif tel que décrit précédemment et comprenant en outre un différentiel, le dispositif de transmission de couple comprenant un organe de sortie apte à entrainer en rotation le différentiel.

Le dispositif de transmission de l'ensemble de transmission peut comprendre l'une au mois des caractéristiques précédentes et l'ensemble de transmission de couple peut comprendre l'une au moins des caractéristiques ci-dessous :
Un autre mécanisme de réduction de vitesse peut être formé par l'organe de sortie et le différentiel.

L'ensemble de transmission comprend en outre un mécanisme de frein de stationnement comportant une roue dentée de blocage montée solidaire en rotation sur l'organe de transmission, ou sur le différentiel, ou sur une portion du dispositif de transmission située cinématiquement entre l'organe de transmission et le différentiel, la roue dentée de blocage étant associée à un levier de verrouillage piloté et mobile entre une position de blocage dans laquelle il vient s'engager dans la denture de la roue dentée de blocage de manière à empêcher l'entrainement en rotation du différentiel, et une position de libération dans laquelle il est dégagé de la denture de la roue dentée de blocage de manière à autoriser l'entrainement en rotation du différentiel.

Le mécanisme de réduction de vitesse est formé par l'organe de sortie et le différentiel.

L'invention porte aussi sur un système de transmission de couple comprenant d'une part un dispositif de transmission de couple ou un ensemble de transmission tels que décrits précédemment et d'autre part ledit au moins un moteur du véhicule, l'arbre d'entrée de couple commun étant l'arbre de sortie du moteur. Ainsi, les embrayages sont placés cinématiquement au plus près du moteur, en amont des dispositifs de réduction, ce qui signifie que les deux embrayages sont placés dans une portion la chaine de transmission où le couple est le plus faible. Dans le cas d'embrayages progressifs par friction notamment, cela permet d'avoir une meilleure compacité des embrayages.

L'invention porte aussi sur un procédé d'actionnement d'un dispositif de transmission de couple de véhicule tel que décrit précédemment, le dispositif de transmission de couple comprenant un premier mécanisme de transmission entrainé par un premier élément de sortie d'un premier embrayage du type normalement ouvert, un deuxième mécanisme de transmission entrainé par un deuxième embrayage du type normalement ouvert, un organe de transmission agencé pour être entrainé par le premier mécanisme de transmission ou le deuxième mécanisme de transmission, et un élément de connexion apte à interrompre l'entrainement mutuel en rotation entre le premier élément de sortie du premier embrayage et l'organe de transmission; l'élément de connexion étant du type normalement ouvert, dans lequel le procédé comprend les étapes successives suivantes dans une phase d'augmentation de vitesse du véhicule:
- fermer le premier embrayage et ouvrir le deuxième embrayage en vue de transmettre un couple via le premier mécanisme de transmission présentant un premier rapport de vitesse, et fermer l'élément de connexion,
- maintenir fermé le premier embrayage et maintenir ouvert le deuxième embrayage pour transmettre un couple via le premier mécanisme de transmission présentant le premier rapport de vitesse, et maintenir fermé l'élément de connexion
- ouvrir progressivement le premier embrayage et fermer progressivement le deuxième embrayage en vue de transmettre un couple via le deuxième mécanisme de transmission présentant un deuxième rapport de vitesse,
- ouvrir l'élément de connexion pour empêcher l'entrainement du premier élément de sortie du premier embrayage par l'organe de transmission.
- maintenir ouvert le premier embrayage et maintenir fermé le deuxième embrayage pour transmettre un couple via le deuxième mécanisme de transmission présentant le deuxième rapport de vitesse, tout en maintenant ouvert l'élément de connexion.

L'élément de connexion du type normalement ouvert signifie que l'entrainement mutuel en rotation est interrompu lorsque l'élément de connexion est ouvert et que l'entrainement mutuel en rotation est autorisé lorsque l'élément de connexion est fermé.

Le procédé d'actionnement peut comprendre en outre les étapes successives suivantes dans une phase de décélération du véhicule :
- fermer l'élément de connexion pour autoriserl'entrainementdu premierélémentde sortie du premier embrayage par l'organe de transmission.
- ouvrir progressivement le deuxième embrayage et fermer progressivement le premier embrayage en vue de transmettre un couple via le premier mécanisme de transmission présentant le premier rapport de vitesse,
- maintenir fermé le premier embrayage et maintenir ouvert le deuxième embrayage pour transmettre un couple via le premier mécanisme de transmission présentant le premier rapport de vitesse, tout en maintenant fermé l'élément de connexion.

Autrement dit, lorsque le premier embrayage est fermé, l'élément de connexion est nécessairement fermé.

Le procédé d'actionnement peut comprendre en outre l'étape suivante dans une phase de mise en mode de sécurité du dispositif de transmission de couple :
- ouvrir le premier embrayage, le deuxième embrayage et l'élément de connexion.

L'invention porte aussi sur un dispositif d'actionnement pour la mise en oeuvre du procédé tel que décrit précédemment, le dispositif d'actionnement comprenant :
- une pompe à deux sorties entrainée par un moteur de pompe,
- un premier circuit pour alimenter en fluide d'actionnementun premier embrayage du type normalement ouvert d'un dispositif de transmission, de façon à actionner le premier embrayage,
- un deuxième circuit pour alimenter en fluide d'actionnement un deuxième embrayage du type normalement ouvert du dispositif de transmission, de façon à actionner le deuxième embrayage,
- un troisième circuit pour alimenter en fluide d'actionnement un élément de connexion du type normalement ouvert, de façon à ouvrir l'élément de connexion lorsque le premier embrayage est ouvert, le troisième circuit et le premier circuit étant reliés à l'une des deux sorties de la pompe et le deuxième circuit étant relié à l'autre des deux sorties de la pompe.

L'élément de connexion du type normalement ouvert signifie que la connexion (ou l'entrainement) est interrompue lorsque l'élément de connexion est ouvert et que la connexion (ou l'entrainement) est autorisée lorsque l'élément de connexion est fermé.

Le dispositif de transmission peut comprendre l'une au mois des caractéristiques précédentes et l'une au moins des caractéristiques ci-dessous :
L'élément de connexion est agencé de préférence sur un sous-ensemble de transmission reliant un premier élément de sortie du premier embrayage et un deuxième élément de sortie du deuxième embrayage.

L'invention porte aussi sur un ensemble comprenant le dispositif de transmission de couple et et le dispositif d'actionnement décrits précédemment.

### Brève description des figures

[Fig. 1] est un schéma de principe d'un système de transmission de couple selon un premier mode de réalisation de l'invention,
[Fig. 2] est un schéma de principe d'un système de transmission de couple selon un deuxième mode de réalisation de l'invention,
[Fig. 3] est un une vue de coupe schématique du système de transmission de couple selon le premier mode de réalisation de l'invention,
[Fig. 4] est une vue en coupe d'un système de transmission de couple selon un troisième mode de réalisation.

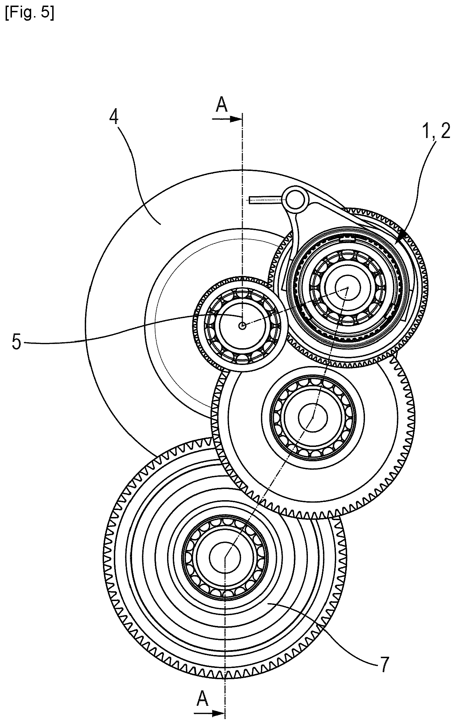

[Fig. 5] est une vue de côté du système de transmission de couple selon le troisième mode de réalisation.
[Fig. 6] est une vue en coupe agrandie de l'élément de connexion du troisième mode de réalisation.
[Fig. 7] est un schéma de principe du procédé d'actionnement du dispositif
[Fig. 8] est un schéma de principe du dispositif d'actionnement

### Description détaillée de l'invention

Dans la description et les revendications, on utilisera les termes "externe" et "interne" ainsi que les orientations "axiale" et "radiale" pour désigner, selon les définitions données dans la description, des éléments du dispositif de transmission. Par convention, l'orientation "radiale" est dirigée orthogonalement à l'orientation axiale. L'orientation axiale se rapporte, suivant le contexte, à l'axe de rotation de l'un des arbres, par exemple l'arbre de sortie du moteur ou l'arbre de transmission 5. L'orientation "circonférentielle" est dirigée orthogonalement à l'axe X de rotation du double volant amortisseur et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

Les différents organes du dispositif de transmission disposent chacun d'une entrée de couple appelé aussi élément d'entrée ainsi que d'une sortie de couple appelé aussi élément de sortie. L'entrée est située, d'un point de vue cinématique, du côté du moteur et la sortie est située du côté des roues du véhicule.

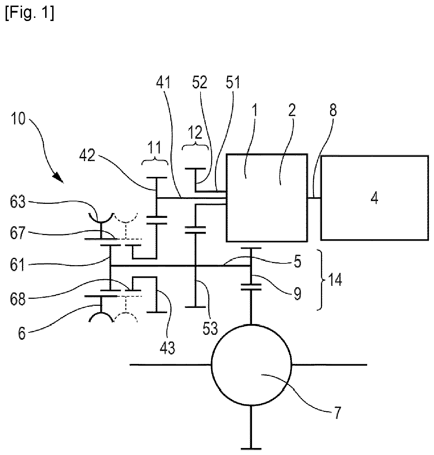

La figure 1 est un schéma de principe illustrant un premier mode de réalisation de l'invention. La figure 1 illustre un système de transmission de couple comprenant un moteur électrique 4 de véhicule apte à faire avancer le véhicule, et un ensemble de transmission de couple. L'ensemble de transmission de couple comporte un dispositif de transmission 10 et un différentiel 7 apte à entrainer deux roues latéralement opposées su véhicule. Le dispositif de transmission de couple 10 comprend un organe de sortie 9 couplé au différentiel 7.

Le dispositif de transmission de couple 10 comporte :
- un premier embrayage 1 comprenant un premier élément d'entrée apte à être entrainé par le moteur 4 et un premier élément de sortie, un couple étant transmis entre le premier élément d'entrée et le premier élément de sortie lorsque le premier embrayage est fermé,
- un deuxième embrayage 2 comprenant un deuxième élément d'entrée apte à être entrainé par le moteur et un deuxième élément de sortie, un couple étant transmis entre le deuxième élément d'entrée et le deuxième élément de sortie lorsque le deuxième embrayage est fermé,

- un organe de transmission 5 pouvant être un arbre de transmission 5,
- un premier mécanisme de transmission 11 agencé pour transmettre un couple entre le premier élément de sortie et l'organe de transmission 5, selon un premier rapport de vitesses,
- un deuxième mécanisme de transmission 12 agencé pour transmettre un couple entre le deuxième élément de sortie et l'organe de transmission 5 selon un deuxième rapport de vitesses différent du premier rapport de vitesse,
- un élément de connexion 6 agencé pour autoriser ou interrompre l'entrainement mutuel en rotation entre le premier élément de sortie du premier embrayage 1 et l'organe de transmission 5, par l'intermédiaire du premier mécanisme de transmission 11.

On entend par rapport de vitesse, le ratio entre la vitesse à la sortie du mécanisme de transmission et la vitesse à l'entrée du mécanisme de transmission.

L'organe de transmission est ici un arbre de transmission 5.

Le premier élément d'entrée du premier embrayage 1 et le deuxième élément d'entrée du deuxième embrayage 2 sont agencés pour être entrainés par un arbre d'entrée de couple commun 8 qui est ici l'arbre de sortie du moteur 4. Ainsi, les embrayages 1 et 2 sont placés cinématiquement au plus près du moteur 4, en amont des dispositifs de réduction, ce qui signifie que les deux embrayages sont placés dans une portion la chaine de transmission où le couple est le plus faible. Dans le cas d'embrayages progressifs parfriction notamment, cela permet d'avoir une meilleure compacité des embrayages.

Pour augmenter le couple et baisser la vitesse de rotation à la sortie du dispositif de transmission de couple, un mécanisme de réduction de vitesse est ici formé par l'organe de sortie 9 et le différentiel 7 au moyen d'un pignon 7 formant l'organe de sortie 9 et d'une roue dentée agencée à entrée du différentie, la roue dentée engrenant avec le pignon 9. L'élément de connexion 6 est agencé pour autoriser l'entrainement mutuel en rotation entre le premier élément de sortie du premier embrayage 1 et l'organe de transmission 5, par l'intermédiaire du premier mécanisme de transmission 11, lorsque le premier embrayage 1 est fermé, et pour interrompre l'entrainement mutuel en rotation entre le premier élément de sortie du premier embrayage 1 et l'organe de transmission 5, par l'intermédiaire du premier mécanisme de transmission 11, lorsque le premier embrayage est ouvert.

De façon préférée, l'élément de connexion est agencé de façon à autoriser ou interrompre l'entrainement mutuel directement entre l'organe de transmission 5 et le premier mécanisme de transmission 11. En évitant d'entrainer le premier mécanisme de transmission de façon inutile, on évite d'avoir des pertes de rendements préjudiciables au niveau du premier mécanisme de transmission, pertes qui pourraient être liées en particulier au barbotage des éléments de transmission tournants.

Le premier mécanisme de transmission 11 est un train d'engrenages réducteur de vitesse (du moteur vers le différentiel). Le deuxième mécanisme de transmission 12 est aussi un train d'engrenages réducteur de vitesse. Ces trains d'engrenage peuvent être montés de façon à barboter dans l'huile. Le premier mécanisme de transmission 11 a un rapport de vitesse plus faible que le deuxième mécanisme de transmission 12. Le premier mécanisme de transmission est utilisé pour propulser le véhicule à des vitesses relativement basses, et le deuxième mécanisme de transmission est utilisé pour propulser le véhicule à des vitesses relativement élevées.

Le premier mécanisme de transmission 11 comprend un premier arbre d'entrée 41 solidaire en rotation d'une première roue dentée d'entrée 42 ou pignon 42, une roue dentée de sortie 43 engrenant ici directement avec la première roue dentée d'entrée 42.

Le deuxième mécanisme de transmission 12 comprend un deuxième arbre d'entrée 51 solidaire en rotation d'une deuxième roue dentée d'entrée 52 ou pignon 52, une deuxième roue dentée de sortie 53 engrenant ici directement avec la deuxième roue dentée d'entrée 52. Le deuxième arbre d'entrée est un arbre creux 51 et le premier arbre d'entrée 41 s'étend à l'intérieur de cet arbre creux51. Le deuxième arbre d'entrée 51 et le premier arbre d'entrée 41 sont coaxiaux

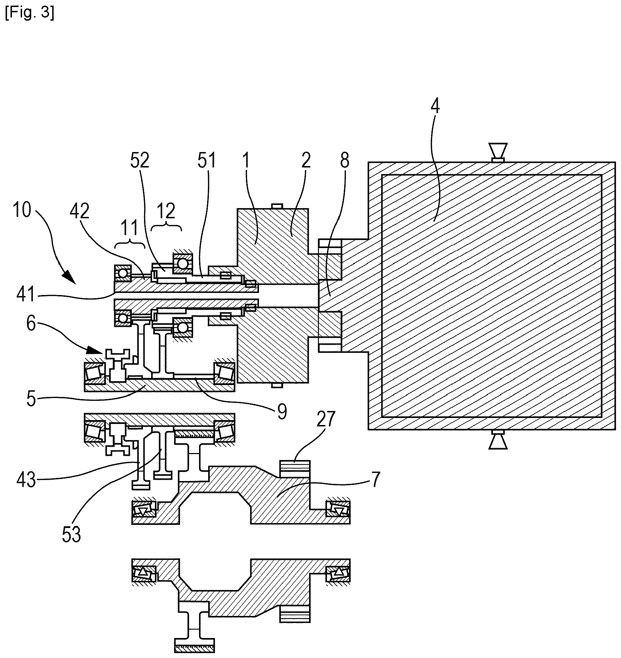

Comme on peut le voir sur schéma de la figure 3, le premier arbre d'entrée 41 peut être formé d'une seule pièce avec le pignon 42. De même, le deuxième arbre d'entrée 51 peut être formé d'une seule pièce avec le pignon 52.

La deuxième roue dentée de sortie 53 est solidaire en rotation de l'organe de transmission 5, par exemple via des cannelures. La première roue dentée de sortie 43 peut être rendue solidaire en rotation de l'organe de transmission 5, par l'intermédiaire de l'élément de connexion 6. De plus, la première roue dentée de sortie 43 est montée rotative sur une portion de l'organe de transmission 5, par exemple via un palier à roulement ou à aiguilles. Une autre portion de l'organe de transmission 5 permet l'accouplement de l'organe de transmission 5 et de la première roue dentée de sortie 43 via l'élément de connexion 6.

Le dispositif de transmission comprend en outre un actionneur apte à faire passer l'élément de connexion 6 d'un premier mode de fonctionnement dans lequel la première roue dentée de sortie 43 est solidaire en rotation de l'organe de transmission 5 à un deuxième mode de fonctionnement dans lequel la première roue dentée de sortie 43 est mobile en rotation par rapport à l'organe de transmission 5.

L'élément de connexion 6 est de préférence du type normalement ouvert. Autrement dit, l'élément de connexion 6 est fermé dans le premier mode de fonctionnement de l'élément de connexion et l'élément de connexion 6 est ouvert dans le deuxième mode de fonctionnement de l'élément de connexion. Comme nous le verrons plus loin, l'élément de connexion 6 peut être commandé hydrauliquement.

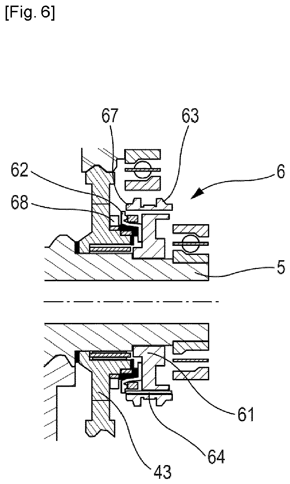

De préférence, l'élément de connexion est un synchroniseur 6. Un tel synchroniseur est représenté sur la figure 6. Un synchroniseur est un dispositif connu par l'homme du métier. La figure 6 représente le synchroniseur du troisième mode de réalisation mais il peut être utilisé également pour les premier et deuxième modes de réalisation.

Le synchroniseur 6 comprend un moyeu 61 solidaire en rotation de l'arbre de transmission 5. Le synchroniseurs comprend un anneau de synchronisation62formant avec la première roue dentée de sortie 43 un embrayage conique parfriction. Le synchroniseur 6 comprend en outre un baladeur 63 solidaire en rotation de clavettes 64, elles même solidaires en rotation du moyeu 61. Les clavettes 64 peuvent coulisser axialement par rapport au moyeu 61. Le baladeur 63 peut également coulisser axialement par rapport au moyeu 61 en entrainant axialement les clavettes 64. Les clavettes 64 sont agencées pour frotter contre l'anneau de synchronisation 62. Le baladeur 63 comprend des dents 67 et la deuxième roue de sortie 43 comprend des dents complémentaires 68 aptes à coopérer avec les dents 67 du baladeur 63, pour entrainer à la même vitesse le baladeur 63 (et donc l'organe de transmission 5) et la deuxième roue de sortie 43 lors du premier mode de fonctionnement.

L'embrayage conique par friction permet un changement de vitesse progressif entre le deuxième mode de fonctionnement et le premier mode de fonctionnement du synchroniseur. Une friction intervient entre la première roue dentée de sortie 43 et l'anneau de synchronisation 62 tant que les vitesses de la première roue dentée de sortie 43 et de l'organe de transmission 5 ne sont pas égales.

L'actionneur hydraulique permet de déplacer le baladeur pour permuter l'élément de connexion 5

Selon un autre mode de réalisation non représenté, l'élément de connexion est permuté de façon centrifuge. Ainsi, lorsqu'un seuil de vitesse prédéterminé est atteint, l'élément de connexion est permuté pour interrompre l'entrainement. La permutation peut être obtenue au moyen d'un organe de rappel élastique dont l'action est compensée parles efforts centrifuges lorsque ledit seuil de vitesse est atteint.

Le premier embrayage 1 est un embrayage progressif par friction et le deuxième embrayage est un embrayage progressif parfriction. Ainsi les changements de vitesses peuvent être lisses et progressifs sans accélérations brusques. On entend par embrayage progressif, un embrayage dont le couple transmissible est contrôlable de façon progressive.

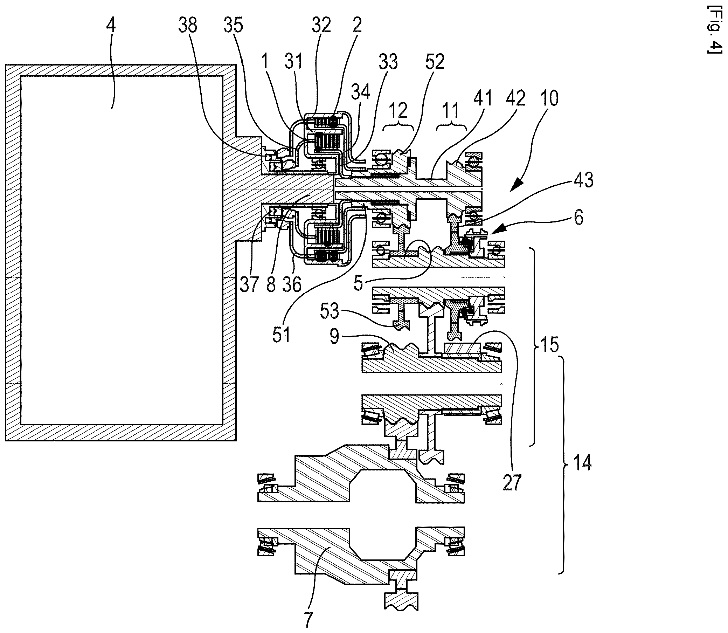

Comme on peut le voir dans le mode de réalisation de la figure 4, le premier embrayage 1 et le deuxième embrayage 2 peuvent former conjointement un double embrayage. Le premier élément d'entrée et le deuxième élément d'entrée forment conjointement un organe d'entrée du double embrayage. Le premier élément d'entrée 31 et le deuxième élément d'entrée 32 ont une portion d'accouplement à l'arbre d'entrée 8 commune. Le premier élément d'entrée 31 et le deuxième élément d'entrée 32 peuvent être formés dans une même pièce. Le premier embrayage 1 et le deuxième embrayage 2 sont coaxiaux

Le premier élément d'entrée 31 a une portion formant un porte-disque couplé à au moins un disque de friction d'entrée. Le premier embrayage 1 comprend un premier élément de sortie 33 monté solidaire en rotation au premier arbre d'entrée 41 par exemple par des cannelures. Le premier embrayage 1 comprend au moins un disque de friction de sortie couplé en rotation au premier élément de sortie 33, le dit au moins disque de friction d'entrée et ledit au moins disque de friction de sortie étant aptes à être pressés l'un contre l'autre par un piston 35 pour transmettre un couple entre le premier élément d'entrée 31 et le premier élément de sortie 33. Un actionneur hydraulique 37 permet de déplacer le piston pour faire passer le premier embrayage 1 d'une position débrayée à une position embrayée.

De même, le deuxième élément d'entrée 32 a une portion formant un porte-disque couplé à au moins un disque de friction d'entrée. Le deuxième embrayage 2 comprend un deuxième élément de sortie 34 monté solidaire en rotation au deuxième arbre d'entrée 51 par exemple par des cannelures. Le deuxième embrayage 2 comprend au moins un disque de friction de sortie couplé en rotation au deuxième élément de sortie 34, le dit au moins disque de friction d'entrée et ledit au moins disque de friction de sortie étant aptes à être pressés l'un contre l'autre par un piston 36 pour transmettre un couple entre le deuxième élément d'entrée 32 et le deuxième élément de sortie 34. Un actionneur hydraulique 38 permet de déplacer le piston pour faire passer le deuxième embrayage 2 d'une position débrayée à une position embrayée. Les actionneurs 37 38 peuvent être coaxiaux et se superposer radialement, et réalisés sous la forme d'un double actionneur. Le premier embrayage et le deuxième embrayage sont donc commandés de façon hydraulique. Le premier embrayage et le deuxième embrayages sont de préférence du type normalement ouverts.

Le premier embrayage 1 comprend un ensemble multi-disques composé d'une pluralité de disques d'entrée et d'une pluralité de disques de sortie se succédant de façon alternée. De même, le deuxième embrayage 2 comprend un ensemble multi-disques composé d'une pluralité de disques d'entrée et d'une pluralité de disques de sortie se succédant de façon alternée. L'ensemble multidisque du premier embrayage 1 se situe radialement à l'intérieur de l'ensemble multidisque du deuxième embrayage 2 avec recouvrement radial. Le premier embrayage et le deuxième embrayage sont des embrayages humides.

Dans chaque mode de réalisation, le dispositif de transmission de couple comprend un réducteur commun sollicité quel que soit le chemin emprunté par le couple moteur (par le premier mécanisme de transmission ou par le deuxième mécanisme de transmission).

Dans le premier mode de réalisation schématisé sur la figure 1, il existe un réducteur commun 14 agencé entre le pignon de sortie 9 du dispositif de transmission et une roue dentée couplée au différentiel 7.

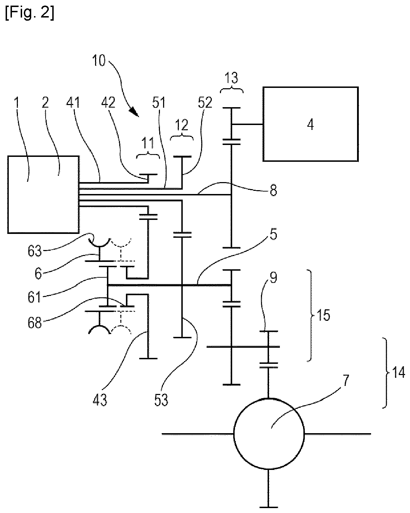

Dans le deuxième mode de réalisation schématisé sur la figure 2, il existe un premier réducteur commun 13 agencé cinématiquement entre le moteur 4 et le double embrayage 1,2. Ce réducteur commun est formé par un train d'engrenage. Un deuxième réducteur commun à deux étages 15, 14 est formé également par un train d'engrenages entre l'organe de transmission 5 et le différentiel 7.

Dans le troisième mode de réalisation représentésur la figure 4, il existe un réducteurcommun à deux étages 15, 14 formé également par un train d'engrenages entre l'organe de transmission 5 et le différentiel 7.

Outre ces différences, le deuxième mode de réalisation de la figure 2 se distingue en ce que le premier mécanisme de transmission 11 et le deuxième mécanisme de transmission 12 sont situés entre d'une part le moteur 4 et d'autre part les premier et deuxième embrayages 1,2. De plus, le deuxième arbre d'entrée 51 est un arbre creux et l'arbre d'entrée de couple commun 8 s'étend à l'intérieurde l'arbre creux51.On a ainsi les trois arbres 8, 51 et41 agencé les uns à l'intérieur des autres, L'arbre d'entrée commun 8 s'étendant à l'intérieurdu deuxième arbre d'entrée 51 qui s'étend à l'intérieur du premier arbre d'entrée 41. L'encombrement est ainsi limité.

Dans le premier mode de réalisation schématique sur la figure 3 et dans le troisième mode de réalisation représenté sur la figure 4, l'ensemble de transmission de couple comprend en outre un mécanisme de frein de stationnement comportant une roue dentée de blocage 27 montée solidaire en rotation sur le différentiel 7 (figure 3), ou sur une portion du dispositif de transmission située cinématiquement entre l'organe de transmission 5 et le différentiel 7 (figure 4). La roue dentée de blocage est associée à un levier de verrouillage (non représenté) piloté et mobile entre une position de blocage dans laquelle il vient s'engager dans la denture de la roue dentée de blocage de manière à empêcher l'entrainement en rotation du différentiel, et une position de libération dans laquelle il est dégagé de la denture de la roue dentée de blocage (27) de manière à autoriser l'entrainement en rotation du différentiel. La roue dentée de blocage pourrait aussi être montée sur l'organe de transmission 5.

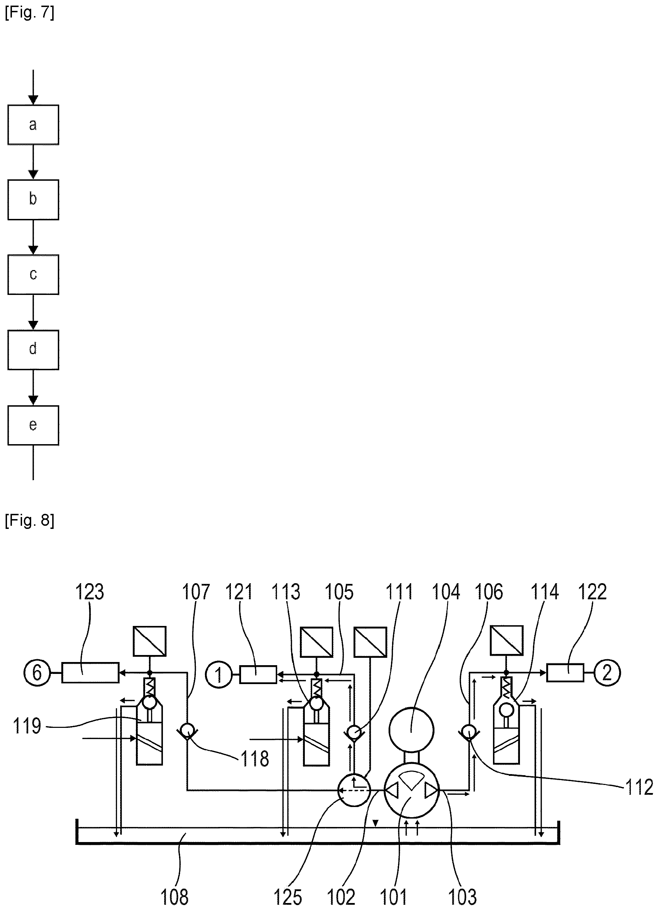

La figure 7 illustre un enchainement d'étapes d'un procédé d'actionnement lorsque le véhicule accélère et passe du premier rapport de vitesse au deuxième rapport de vitesse.

Ce procédé d'actionnement comprend les étapes successives suivantes :
- a :fermer le premier embrayage 1 et ouvrir le deuxième embrayage 2 en vue de transmettre un couple via le premier mécanisme de transmission 11 présentant un premier rapport de vitesse, et fermer l'élément de connexion 6,
- b : maintenir fermé le premier embrayage 1 et maintenir ouvert le deuxième embrayage 2 pour transmettre un couple via le premier mécanisme de transmission 1 présentant le premier rapport de vitesse, et maintenir fermé l'élément de connexion 6,
- c : ouvrir progressivement le premier embrayage 1 et fermer progressivement le deuxième embrayage 2 en vue de transmettre un couple via le deuxième mécanisme de transmission 12 présentant un deuxième rapport de vitesse,
- d : ouvrir l'élément de connexion 6 pour empêcher l'entrainement du premier élément de sortie 33 du premier embrayage 1 par l'organe de transmission 5.
- e : maintenir ouvert le premier embrayage 1 et maintenir fermé le deuxième embrayage 2 pour transmettre un couple via le deuxième mécanisme de transmission 12 présentant le deuxième rapport de vitesse, tout en maintenant ouvert l'élément de connexion 6.

L'élément de connexion 6 du type normalement ouvert signifie que l'entrainement mutuel en rotation est interrompu lorsque l'élément de connexion est ouvert et que l'entrainement mutuel en rotation est autorisé lorsque l'élément de connexion est fermé.

Le procédé d'actionnement comprend en outre les étapes successives suivantes dans une phase de décélération du véhicule, lorsque le véhicule passe du deuxième rapport de vitesse au premier rapport de vitesse :
- fermer l'élément de connexion 6 pour autoriser l'entrainement du premier élément de sortie 33 du premier embrayage 1 par l'organe de transmission 5,
- ouvrir progressivement le deuxième embrayage 2 et fermer progressivement le premier embrayage 1 en vue de transmettre un couple via le premier mécanisme de transmission 11 présentant le premier rapport de vitesse,
- maintenir fermé le premier embrayage 1 et maintenir ouvert le deuxième embrayage 2 pour transmettre un couple via le premier mécanisme de transmission 11 présentant le premier rapport de vitesse, tout en maintenant fermé l'élément de connexion 6.

Autrement dit, lorsque le premier embrayage 1 est fermé, l'élément de connexion 6 est nécessairement fermé.

Dans une phase de mise en mode de sécurité du dispositif de transmission de couple, le procédé comprend en outre une étape visant à ouvrir le premier embrayage1, le deuxième embrayage 2 et l'élément de connexion 6.

Pour mettre en oeuvre ce procédé, un dispositif d'actionnement comprend :
- une pompe 101 à deux sorties 102, 103 entrainée par un moteur de pompe 104,
- un premier circuit 105 pour alimenter en fluide d'actionnement le premier embrayage 1 du type normalement ouvert du dispositif de transmission 10, de façon à actionner le premier embrayage 1,
- un deuxième circuit 106 pour alimenter en fluide d'actionnement un deuxième embrayage 2 du type normalement ouvert du dispositif de transmission 10, de façon à actionner le deuxième embrayage 2,
- un troisième circuit 107 pour alimenter en fluide d'actionnement l'élément de connexion 6 du type normalement ouvert, de façon à ouvrir l'élément de connexion 6 lorsque le premier embrayage 1 est ouvert.

Le troisième circuit 107 et le premier circuit sont connectés à la même sortie 102 de la pompe 101 et le deuxième circuit est connecté à l'autre sortie 103 de la pompe 101. L'élément de connexion 6 du type normalement ouvert signifie que la connexion (ou l'entrainement) est interrompue lorsque l'élément de connexion 6 est ouvert et que la connexion (ou l'entrainement) est autorisée lorsque l'élément de connexion 6 est fermé.

Le dispositif d'actionnement comprend aussi un réservoir 108 de fluide d'actionnement, par exemple du fluide hydraulique. Le fluide peut être acheminé du réservoir 108 aux trois circuits 105, 106, 107 par la pompe 101.

En partant de la pompe 101, chacun des premier et deuxième circuits 105, 106 comprend :
- une vanne anti retour 111, 112 bloquant le fluide dans la direction de la pompe,
- une soupape d'étranglement proportionnelle 113, 114 reliée au réservoir 108 et pouvant être actionnée électromagnetiquement,
- un récepteur hydraulique d'embrayage 121, 122 raccordés aux premier et deuxième embrayages 1 et 2.

Chacun des premier circuit et deuxième circuit comprend en outre un capteur de pression. De même, en partant de la pompe 101, le troisième circuit 107 comprend :
- une vanne anti retour 118 bloquant le fluide dans la direction de la pompe,
- une soupape d'étranglement proportionnelle 119 reliée au réservoir 108 et pouvant être actionnée électromagnetiquement,
- un récepteur hydraulique 123 raccordé à l'élément de connexion 6,

Le troisième circuit 107 comprend en outre un capteur de pression.

Une unité de commande électronique (non représentée) peut coordonner l'activation du moteur de pompe 104 et des soupapes d'étranglement 113, 114, 119.

Le dispositif d'actionnement peut comprendre aussi d'autres arrangements, tels que des dispositifs de refroidissement des embrayages, comme décrit dans le brevet US8939268. Les soupapes d'étranglement proportionnelle 113, 114, 119 sont de préférence sansfuite. Un distributeur hydraulique 125 joint le premier circuit 105 et le troisième circuit 107 à la sortie de pompe 102. Ce distributeur hydraulique peut être activé par l'unité de commande qui pilote également les soupapes d'étranglement et le moteur de pompe.

En cas de perte d'alimentation électrique, ou de détection d'une défaillance du calculateur, par sécurité, les soupapes d'étranglement proportionnelles 113, 114, 119 des trois circuits s'ouvrent et l'organe de connexion s'ouvre au moyen d'un moyen de rappel élastique ou d'un crabot dégageant.

## Revendications

1. Dispositif de transmission de couple (10) à deux rapports de vitesse pour un véhicule comprenant au moins un moteur électrique (4), le dispositif de transmission de couple (10) comprenant exactement deux rapports de vitesses, et le dispositif de transmission de couple comprenant :
- un premier embrayage (1) comprenant un premier élément d'entrée (31) apte à être entrainé par le moteur électrique et un premier élément de sortie (33), un couple étant transmis entre le premier élément d'entrée (31) et le premier élément de sortie (33) lorsque le premier embrayage est fermé,
- un deuxième embrayage (2) comprenant un deuxième élément d'entrée (32) apte à être entrainé par le moteur électrique et un deuxième élément de sortie (34), un couple étant transmis entre le deuxième élément d'entrée (32) et le deuxième élément de sortie (34) lorsque le deuxième embrayage est fermé,
- un organe de transmission (5),
- un premier mécanisme de transmission (11) agencé pour transmettre un couple entre le premier élément de sortie (33) et l'organe de transmission (5), selon un premier rapport de vitesses, le premier rapport de vitesse étant le rapport de vitesse le plus lent du dispositif de transmission de couple,
- un deuxième mécanisme de transmission (12) agencé pour transmettre un couple entre le deuxième élément de sortie (34) et l'organe de transmission (5), selon un deuxième rapport de vitesses différent du premier rapport de vitesse, le deuxième rapport de vitesse étant le rapport de vitesse le plus rapide du dispositif de transmission de couple,
- un élément de connexion (6) agencé pour autoriser ou interrompre l'entrainement mutuel en rotation entre le premier élément de sortie (33) du premier embrayage (1) et l'organe de transmission (5), par l'intermédiaire du premier mécanisme de transmission (11).

2. Dispositif de transmission de couple selon la revendication 1 dans lequel le premier embrayage et le deuxième embrayage sont des embrayages multidisques humides.

3. Dispositif de transmission de couple selon la revendication 1 ou 2 dans lequel l'élément de connexion (6) est agencé pour coopérer uniquement avec le premier mécanisme de de transmission associé au premier rapport de vitesse.

4. Dispositif de transmission de couple selon l'une des revendications précédentes dans lequel l'élément de connexion (6) est agencé pour autoriser l'entrainement mutuel en rotation entre le premier élément de sortie du premier embrayage (1) et l'organe de transmission (5), par l'intermédiaire du premier mécanisme de transmission (11) lorsque le premier embrayage est fermé, et pour interrompre l'entrainement mutuel en rotation entre le premier élément de sortie du premier embrayage (1) et l'organe de transmission (5), par l'intermédiaire du premier mécanisme de transmission (11) lorsque le premier embrayage est ouvert.

5. Dispositif de transmission de couple selon l'une des revendications précédentes dans lequel l'élément de connexion (6) est agencé de façon à autoriser ou interrompre l'entrainement mutuel entre l'organe de transmission (5) et le premier mécanisme de transmission (11).

6. Dispositif de transmission de couple selon l'une des revendications précédentes dans lequel l'élément de connexion (6) est agencé de façon à autoriser ou interrompre l'entrainement mutuel entre le premier élément de sortie (33) du premier embrayage et le premier mécanisme de transmission (11).

7. Dispositif de transmission de couple selon l'une des revendications précédentes dans lequel le premier mécanisme de transmission (11) est un réducteur et le premier mécanisme de transmission (11) a un rapport de vitesse plus faible que le deuxième mécanisme de transmission (12).

8. Dispositif de transmission de couple selon l'une des revendications précédentes dans lequel le deuxième mécanisme de transmission est un réducteur.

9. Dispositif de transmission de couple selon l'une des revendications précédentes dans lequel le premier élément d'entrée (31) et le deuxième élément d'entrée (32) sont agencés pour être entrainés par un arbre d'entrée de couple commun (8).

10. Dispositif de transmission de couple selon l'une des revendications précédentes dans lequel le premier mécanisme de transmission (11) comprend un premier arbre d'entrée (41) solidaire en rotation d'une première roue dentée d'entrée (42), une roue dentée de sortie (43) engrenant, directement ou indirectement, avec la première roue dentée d'entrée (42); et dans lequel le deuxième mécanisme de transmission (12) comprend un deuxième arbre d'entrée (51) solidaire en rotation d'une deuxième roue dentée d'entrée (52), une deuxième roue dentée de sortie (53) engrenant, directement ou indirectement (via une ou plusieurs roues dentées intermédiaires), avec la deuxième roue dentée d'entrée (52).

11. Dispositif de transmission de couple selon la revendication précédente dans lequel l'élément de connexion est agencé pour coopérer uniquement avec la première roue dentée d'entrée (42) ou la roue dentée de sortie (43).

12. Dispositif de transmission de couple selon la revendication 10 ou 11 dans lequel l'un au moins parmi le premier arbre d'entrée (41) et le deuxième arbre d'entrée (51) est un arbre creux et l'autre parmi le premier arbre d'entrée (41) et le deuxième arbre d'entrée (51) s'étend à l'intérieur de l'arbre creux.

13. Dispositif de transmission de couple selon l'une des revendications précédentes dans lequel l'élément de connexion (6) est un synchroniseur.

14. Ensemble de transmission de couple comprenant un dispositif selon l'une des revendications précédentes et comprenant en outre un différentiel, le dispositif de transmission de couple comprenant un organe de sortie (9) apte à entrainer en rotation le différentiel (7).

15. Système de transmission de couple comprenant d'une part un dispositif de transmission de couple selon la revendication 9 ou un ensemble de transmission selon la revendication 14 combinée à la revendication 9, et d'autre part ledit au moins un moteur électrique (4) du véhicule, l'arbre d'entrée de couple commun (8) étant l'arbre de sortie du moteur électrique.

## Patentansprüche

1. Drehmomentübertragungsvorrichtung (10) mit zwei Übersetzungsverhältnissen für ein Fahrzeug, das mindestens einen Elektromotor (4) umfasst, wobei die Drehmomentübertragungsvorrichtung (10) genau zwei Übersetzungsverhältnisse umfasst und wobei die Drehmomentübertragungsvorrichtung umfasst:
- eine erste Kupplung (1), die ein erstes Eingangselement (31), das geeignet ist, von dem Elektromotor angetrieben zu werden, und ein erstes Ausgangselement (33) umfasst, wobei ein Drehmoment zwischen dem ersten Eingangselement (31) und dem ersten Ausgangselement (33) übertragen wird, wenn die erste Kupplung geschlossen ist,
- eine zweite Kupplung (2), die ein zweites Eingangselement (32), das geeignet ist, von dem Elektromotor angetrieben zu werden, und ein zweites Ausgangselement (34) umfasst, wobei ein Drehmoment zwischen dem zweiten Eingangselement (32) und dem zweiten Ausgangselement (34) übertragen wird, wenn die zweite Kupplung geschlossen ist,
- ein Übertragungsorgan (5),
- einen ersten Übertragungsmechanismus (11), der dazu eingerichtet ist, ein Drehmoment zwischen dem ersten Ausgangselement (33) und dem Übertragungsorgan (5) gemäß einem ersten Übersetzungsverhältnis zu übertragen, wobei das erste Übersetzungsverhältnis das langsamste Übersetzungsverhältnis der Drehmomentübertragungsvorrichtung ist,
- einen zweiten Übertragungsmechanismus (12), der dazu eingerichtet ist, ein Drehmoment zwischen dem zweiten Ausgangselement (34) und dem Übertragungsorgan (5) gemäß einem zweiten Übersetzungsverhältnis zu übertragen, das von dem ersten Übersetzungsverhältnis verschieden ist, wobei das zweite Übersetzungsverhältnis das schnellste Übersetzungsverhältnis der Drehmomentübertragungsvorrichtung ist,
- ein Verbindungselement (6), das dazu eingerichtet ist, den wechselseitigen Drehantrieb zwischen dem ersten Ausgangselement (33) der ersten Kupplung (1) und dem Übertragungsorgan (5), über den ersten Übertragungsmechanismus (11), zuzulassen oder zu unterbrechen.

2. Drehmomentübertragungsvorrichtung nach Anspruch 1, wobei die erste Kupplung und die zweite Kupplung nasslaufende Mehrscheibenkupplungen sind.

3. Drehmomentübertragungsvorrichtung nach Anspruch 1 oder 2, wobei das Verbindungselement (6) dazu eingerichtet ist, nur mit dem ersten Übertragungsmechanismus, der dem ersten Übersetzungsverhältnis zugeordnet ist, zusammenzuwirken.

4. Drehmomentübertragungsvorrichtung nach einem der vorhergehenden Ansprüche, wobei das Verbindungselement (6) dazu eingerichtet ist, den wechselseitigen Drehantrieb zwischen dem ersten Ausgangselement der ersten Kupplung (1) und dem Übertragungsorgan (5), über den ersten Übertragungsmechanismus (11), zuzulassen, wenn die erste Kupplung geschlossen ist, und den wechselseitigen Drehantrieb zwischen dem ersten Ausgangselement der ersten Kupplung (1) und dem Übertragungsorgan (5), über den ersten Übertragungsmechanismus (11), zu unterbrechen, wenn die erste Kupplung geöffnet ist.

5. Drehmomentübertragungsvorrichtung nach einem der vorhergehenden Ansprüche, wobei das Verbindungselement (6) so eingerichtet ist, dass es den wechselseitigen Antrieb zwischen dem Übertragungsorgan (5) und dem ersten Übertragungsmechanismus (11) zulässt oder unterbricht.

6. Drehmomentübertragungsvorrichtung nach einem der vorhergehenden Ansprüche, wobei das Verbindungselement (6) so eingerichtet ist, dass es den wechselseitigen Antrieb zwischen dem ersten Ausgangselement (33) der ersten Kupplung und dem ersten Übertragungsmechanismus (11) zulässt oder unterbricht.

7. Drehmomentübertragungsvorrichtung nach einem der vorhergehenden Ansprüche, wobei der erste Übertragungsmechanismus (11) ein Untersetzungsgetriebe ist und der erste Übertragungsmechanismus (11) ein geringeres Übersetzungsverhältnis als der zweite Übersetzungsmechanismus (12) hat.

8. Drehmomentübertragungsvorrichtung nach einem der vorhergehenden Ansprüche, wobei der zweite Übertragungsmechanismus ein Untersetzungsgetriebe ist.

9. Drehmomentübertragungsvorrichtung nach einem der vorhergehenden Ansprüche, wobei das erste Eingangselement (31) und das zweite Eingangselement (32) dazu eingerichtet sind, von einer gemeinsamen Drehmomenteingangswelle (8) angetrieben zu werden.

10. Drehmomentübertragungsvorrichtung nach einem der vorhergehenden Ansprüche, wobei der erste Übertragungsmechanismus (11) eine erste Eingangswelle (41) umfasst, die drehfest mit einem ersten Eingangszahnrad (42) verbunden ist, wobei ein Ausgangszahnrad (43), direkt oder indirekt, mit dem ersten Eingangszahnrad (42) in Eingriff steht; und wobei der zweite Übertragungsmechanismus (12) eine zweite Eingangswelle (51) umfasst, die drehfest mit einem zweiten Eingangszahnrad (52) verbunden ist, wobei ein zweites Ausgangszahnrad (53), direkt oder indirekt (über ein oder mehrere Zwischenzahnräder), mit dem zweiten Eingangszahnrad (52) in Eingriff steht.

11. Drehmomentübertragungsvorrichtung nach dem vorhergehenden Anspruch, wobei das Verbindungselement dazu eingerichtet ist, nur mit dem ersten Eingangszahnrad (42) oder dem Ausgangszahnrad (43) zusammenzuwirken.

12. Drehmomentübertragungsvorrichtung nach Anspruch 10 oder 11, wobei mindestens eine unter der ersten Eingangswelle (41) und der zweiten Eingangswelle (51) eine Hohlwelle ist und die andere unter der ersten Eingangswelle (41) und der zweiten Eingangswelle (51) sich im Inneren der Hohlwelle erstreckt.

13. Drehmomentübertragungsvorrichtung nach einem der vorhergehenden Ansprüche, wobei das Verbindungselement (6) eine Synchronisiereinrichtung ist.

14. Drehmomentübertragungsanordnung, umfassend eine Vorrichtung nach einem der vorhergehenden Ansprüche und umfassend ferner ein Differential, wobei die Drehmomentübertragungsvorrichtung ein Ausgangsorgan (9) umfasst, das geeignet ist, das Differential (7) drehanzutreiben.

15. Drehmomentübertragungssystem, umfassend zum einen eine Drehmomentübertragungsvorrichtung nach Anspruch 9 oder eine Übertragungsanordnung nach Anspruch 14 in Verbindung mit Anspruch 9 und zum anderen den mindestens einen Elektromotor (4) des Fahrzeugs, wobei die gemeinsame Drehmomenteingangswelle (8) die Ausgangswelle des Elektromotors ist.

## Claims

1. Two-speed torque transmission device (10) for a vehicle comprising at least one electric motor (4), the torque transmission device (10) comprising exactly two gear ratios and the torque transmission device comprising:
- a first clutch (1) comprising a first input element (31) capable of being driven by the electric motor, and a first output element (33), torque being transmitted between the first input element (31) and the first output element (33) when the first clutch is closed,
- a second clutch (2) comprising a second input element (32) capable of being driven by the electric motor, and a second output element (34), torque being transmitted between the second input element (32) and the second output element (34) when the second clutch is closed,
- a transmission member (5),
- a first transmission mechanism (11) arranged to transmit torque between the first output element (33) and the transmission member (5), according to a first gear ratio, the first gear ratio being the slowest gear ratio of the torque transmission device,
- a second transmission mechanism (12) arranged to transmit torque between the second output element (34) and the transmission member (5), according to a second gear ratio different from the first gear ratio, the second gear ratio being the fastest gear ratio of the torque transmission device,
- a connection element (6) arranged to permit or interrupt the mutual rotational drive between the first output element (33) of the first clutch (1) and the transmission member (5), by means of the first transmission mechanism (11).

2. Torque transmission device according to Claim 1, wherein the first clutch and the second clutch are wet multi-disc clutches.

3. Torque transmission device according to Claim 1 or 2, wherein the connection element (6) is arranged to interact solely with the first transmission mechanism associated with the first gear ratio.

4. Torque transmission device according to one of the preceding claims, wherein the connection element (6) is arranged to permit the mutual rotational drive between the first output element of the first clutch (1) and the transmission member (5), by means of the first transmission mechanism (11), when the first clutch is closed, and to interrupt the mutual rotational drive between the first output element of the first clutch (1) and the transmission member (5), by means of the first transmission mechanism (11), when the first clutch is open.

5. Torque transmission device according to one of the preceding claims, wherein the connection element (6) is arranged so as to permit or interrupt the mutual drive between the transmission member (5) and the first transmission mechanism (11).

6. Torque transmission device according to one of the preceding claims, wherein the connection element (6) is arranged so as to permit or interrupt the mutual drive between the first output element (33) of the first clutch and the first transmission mechanism (11).

7. Torque transmission device according to one of the preceding claims, wherein the first transmission mechanism (11) is a reduction gear and the first transmission mechanism (11) has a lower gear ratio than the second transmission mechanism (12).

8. Torque transmission device according to one of the preceding claims, wherein the second transmission mechanism is a reduction gear.

9. Torque transmission device according to one of the preceding claims, wherein the first input element (31) and the second input element (32) are arranged to be driven by a common torque input shaft (8).

10. Torque transmission device according to one of the preceding claims, wherein the first transmission mechanism (11) comprises a first input shaft (41) rigidly connected to a first toothed input wheel (42) for rotation therewith, a toothed output wheel (43) meshing, directly or indirectly, with the first toothed input wheel (42), and wherein the second transmission mechanism (12) comprises a second input shaft (51) rigidly connected to a second toothed input wheel (52) for rotation therewith, a second toothed output wheel (53) meshing, directly or indirectly (via one or more intermediate toothed wheels), with the second toothed input wheel (52).

11. Torque transmission device according to the preceding claim, wherein the connection element is arranged to interact solely with the first toothed input wheel (42) or the toothed output wheel (43).

12. Torque transmission device according to Claim 10 or 11, wherein at least one of the first input shaft (41) and the second input shaft (51) is a hollow shaft and the other of the first input shaft (41) and the second input shaft (51) extends inside the hollow shaft.

13. Torque transmission device according to one of the preceding claims, wherein the connection element (6) is a synchronizer.

14. Torque transmission assembly comprising a device according to one of the preceding claims and further comprising a differential, the torque transmission device comprising an output member (9) capable of rotating the differential (7).

15. Torque transmission system comprising a torque transmission device according to Claim 9 or a transmission assembly according to Claim 14 combined with Claim 9 and said at least one electric motor (4) of the vehicle, the common torque input shaft (8) being the output shaft of the electric motor.
